# EUROPEAN PATENT APPLICATION

(11) **EP 1 965 544 A1**
(43) Date of publication of application: **03.09.2008**
(21) Application number: 07004378.1
(22) Date of filing: 02.03.2007
(51) Int. Cl.: H04L 12/26, H04L 12/46, H04L 29/06

(54) **Method and device for network interworking and system comprising such device**

(71) Applicant: Siemens Networks GmbH & Co. KG, 81541 München (DE)
(72) Inventor: The designation of the inventor has not yet been filed
(74) Representative: Maier, Daniel Oliver

(57) **Abstract**

A method and a device are provided for network interworking comprising the steps of (i) user data and control data according to a protocol of a first network (101) are received by a first network component (102); (ii) the control data is mapped according to a protocol of a second network (103) and forwarded to a second network component (104); and (iii) the user data is mapped according to the protocol of the second network (103) and forwarded to the second network component (104). The first network (101) and the second network (102) are of different type.

## Description

The invention relates to a method and a device for network interworking and a system comprising such a device.

A virtual LAN, known as a vLAN or as a VLAN, refers to independent logical networks within a physical network. Several VLANs can co-exist within such a network. This helps in reducing the broadcast domain and aids in network administration by separating logical segments of a LAN (like company departments) that should not exchange data using a LAN (they still may exchange data by routing).

A VLAN comprises a network of computers that behave as if connected to the same wire - even though they may actually be physically connected to different segments of a LAN. Network administrators configure VLANs through software rather than hardware, which makes them extremely flexible. One of the biggest advantages of VLANs emerges when physically moving a computer to another location: it can stay on the same VLAN without the need for any hardware reconfiguration.

Further, a (network) bridge is known that connects multiple network segments at the data link layer (layer 2) of the OSI model. Bridges are similar to repeaters or network hubs, devices that connect network segments at the physical layer, however a bridge works by using bridging where traffic from one network is managed rather than simply rebroadcast to adjacent network segments. Since bridging takes place at the data link layer of the OSI model, a bridge processes the information from each frame of data it receives. In an Ethernet frame, this provides the MAC (Media Access Control) address of the frame's source and destination. Bridges use two methods to resolve the network segment that a MAC address belongs to.

A VLAN switching system forwards data packets to the respective VLANs. This can be done by a Service-VLAN switching (S-VLAN) or by Service- and Customer-VLAN (S+C-VLAN) switching.

VLAN switching is an alternative to MAC bridging thereby the Ethernet network evolves from a connectionless to a connection-oriented network. Furthermore, according to VLAN switching, resiliency mechanisms can be provided.

VLANs for VLAN cross exchange (VLAN XC) use ports of the addressed network components via VLAN XC Tags to find the way through the network. In contrast, VLANs for bridging are significant throughout the network.

Connectivity Fault Management (CFM) is formalized by IEEE 802.1ag. This allows discovery and verification of the path, through 802.1 bridges and LANs. CFM can be used to monitor and/or test a Ethernet segment running the VLAN XC protocol or bridging.

A problem occurs however, if networks of different types, e.g. an Ethernet network and a IP network, in particular a VLAN XC network and a MultiProtocol Label Switching (MPLS) network are part of a communication path from one network component to another network component.

The object to be solved is to overcome the problems indicated before and to provide an efficient method for interworking of different network types.

This problem is solved according to the features of the independent claims. Further embodiments result from the depending claims.

In order to overcome this problem a method is provided for network interworking comprising the steps:
- user data and control data according to a protocol of a first network are received by a first network component;
- the control data is mapped according to a protocol of a second network and forwarded to a second network component;
- the user data is mapped according to the protocol of the second network and forwarded to the second network component.

The first network and the second network are of different type.

This allows that user data and control data that can be deemed logically separated to be mapped from a protocol of a first network to a protocol of a second network. Hence, the user data and the control data received at the first network component according to the protocol of the first network are then forwarded by the first network component (to a second network component) via the protocol of the second network.

As an embodiment, the first network and/or the second network are at least one of the following types (wherein the first network and the second network are different to one another):
- Virtual LAN (VLAN);
- Virtual LAN Cross Connect (VLAN XC);
- an Ethernet network;
- an IP network;
- a MultiProtocol Label Switching (MPLS) network.

In a further embodiment, the first network component and/or the second network component are of the following type:
- a network node;
- a gateway;
- a switch;
- a terminal;
- a user equipment;
- a mobile phone;
- a relay node.

In yet another embodiment, the first network component comprises an ingress port and an egress port. The control data according to the protocol of the first network is fed, connected or terminates at the egress port.

Further, the control data forwarded according to the protocol of the second network starts at the ingress port of the first network component.

In another embodiment, the user data received according to the protocol of the first network is mapped to user data according to the protocol of the second network at the ingress port of the first network component.

According to a further embodiment, the control data according to the protocol of the first network comprises Connectivity Fault Management (CFM) traffic.

The problem stated supra is also solved by a device for network interworking comprising a processor unit that is arranged or equipped such that the method as described herein is executable on said processor.

This device can be of the following type:
- a network node;
- a gateway;
- a switch;
- a terminal;
- a user equipment;
- a mobile phone;
- a relay node.

The problem is also solved by a communication system comprising the device as described herein.

Embodiments of the invention are shown and illustrated in the following figures:
- Fig.1: shows a first network component between a first network and a second network, wherein said first network component performs an interworking function between the first network and the second network;
- Fig.2: shows communication paths conducted via several network components through a first network and a second network, both networks being connected by a network component performing interworking services;
- Fig.3: shows the first network component of Fig.1 in more detail;
- Fig.4: shows a flow chart of steps performing interworking between networks.

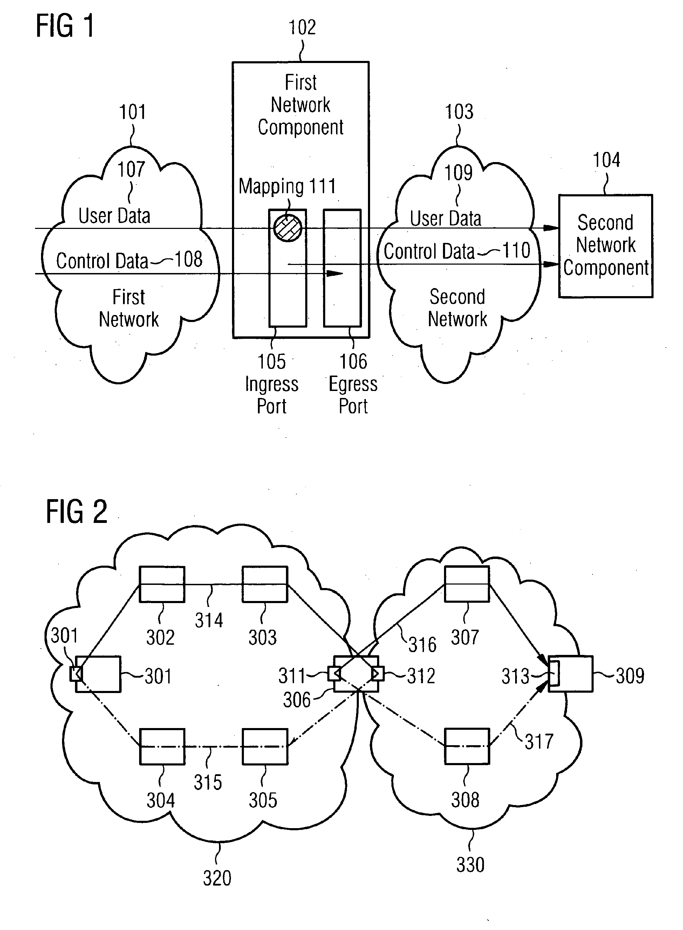

**Fig.1** shows a first network component 102 for network interworking. Data traffic comprising user data 107 and control data 108 is sent via a first network 101 to the first network component 102. User data 109 and control data 110 are sent from the first network component 102 via a second network 103 to a second network component 104. In this example, the first network 101 and the second network 103 are different to one another, i.e. they operate according to different (communication) protocols. Hence, the messages sent through the respective networks 101, 102 are adapted to meet the requirements of the respective protocol.

The first network component 102 comprises an ingress port 105 and an egress port 106. The user data 107 is mapped according to the protocol of the second network 103 by a mapping means 111 at the ingress port 105. This allows the user data 107 to be forwarded to the second network as user data 109 (mapped according to the requirements of the protocol of the second network 103).

The control data 108 terminates a the egress port 106. As the control data 108 comprises messages according to the protocol of the first network these messages are preferably mapped to and re-initiated at the ingress port 105, where control messages (control data 110) according to the protocol of the second network 103 start. This control data 110 is sent to the second network component 104.

As the control data 108 terminates at the egress port 106 and the control data 110 starts at the ingress port 105 there is a crossing function performed by the first network component 102 in view of the start/end-points of the control data 108 and 110.

As an example, the first network 101 can be an Ethernet network running VLAN XC and the control data 108 is provided by Connectivity Fault Management (CFM) messages. Further, the second network 103 can be a MultiProtocol Label Switching (MPLS) network, control data 110 is sent via MPLS PW (Protected Wire) messages.

The first network component 102 allows interworking of the Ethernet protocol running VLAN XC and CFM on one side and MPLS at the other side. This enables end-to-end resiliency resolution beyond both of these protocols.

By splitting the traffic into control data and user data of the CFM protocol, the end-to-end resiliency can be achieved.

The first network component 102 can be a network node, a gateway, a switch, a terminal, a user equipment, a mobile phone or a relay node. This also applies to the types the second network component 104 can be of.

In **Fig.2** a first network 320 comprises network elements, e.g., gateways or switches 301 to 305. A second network 330 comprises network elements, e.g., gateways or switches 307 and 308 and a further network element, e.g., an edge router 309. A network element 306 is located between the first network 320 and the second network 330 and can be a gateway or a switch.

The network element 301 is referred to as Node A and comprises a Port A 310, the network element 306 is referred to as Node B comprising a Port C 311 and a Port B 312 and the network element 309 is referred to as Node C comprising a Port D 313.

Traffic from Port A 310 to Port D 309 goes via communication channels 314 and 316, which are associated with backup communication channels 315 and 317.

The first network 320 can be an Ethernet network running VLAN Cross Exchange (XC) and Connectivity Fault Management (CFM), whereas the second network 330 can be a MultiProtocol Label Switching (MPLS) network.

The start point of the connection through the first network 320 is at Port A 310 of Node A 301, the corresponding end point is at Port B 312 of Node B 306. The MPLS Protected Wire (PW) channel (through the second network 330) starts at Port C 311 of Node B 306 and ends at Port D 313 of Node C 309.

Hence, node B 306 performs a crossing function between MPLS and VLAN XC.

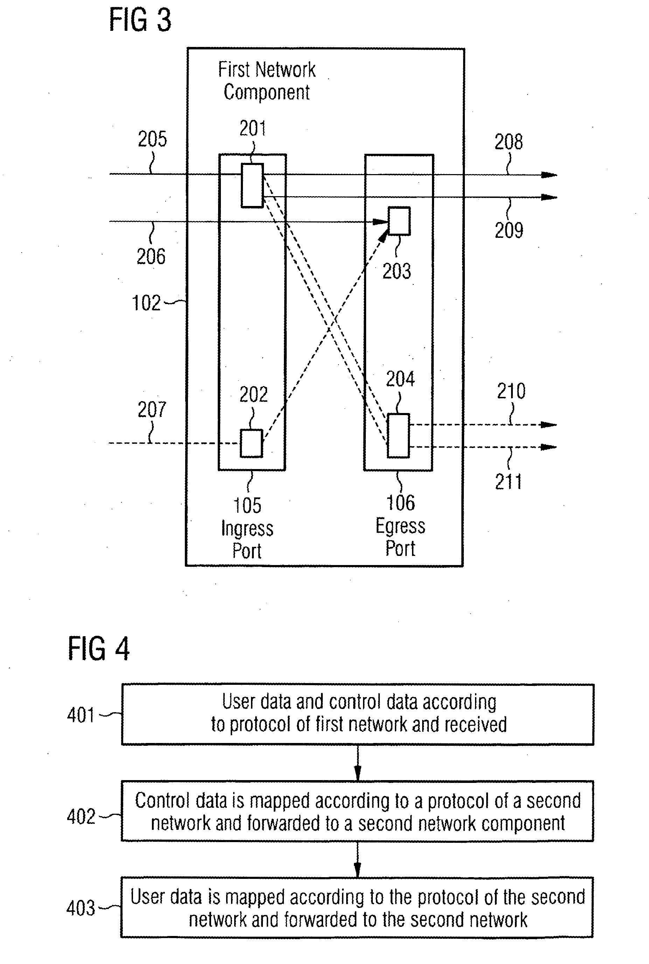

**Fig.3** shows a detailed diagram corresponding to Node B 306 of Fig.2 or corresponding to the first network component 102 of Fig.1. As far as the references are similar to those of Fig.1 it is referred to the description of Fig.1 above.

The fist network component 102 comprises the ingress port 105 and the egress port 106. In the example of Fig.3, an Ethernet VLAN XC network running CFM is provided at the ingress side and an MPLS network is provided at the egress side of the first network component 102.

The ingress port 105 shows an MPLS start point 201 and an in-port 202 for backup traffic. The egress port 106 contains an end point 203 and an out-port 204 for backup traffic.

User data 205 from the Ethernet network is mapped in the MPLS start point 201 according to the MPLS protocol and forwarded as user data 208 to a subsequent network component (e.g. the second network component 104 as shown in Fig.1). Control data 206, preferably CFM messages of the Ethernet VLAN XC protocol terminate at the end point 203, that can be configured as CFM UP-MEP (MEP: Maintenance End Point). These kind of information is mapped to control data 209 that is conform to the MPLS protocol and forwarded to the subsequent network component.

In Fig.3 backup traffic is shown as dashed lines. Backup control data 207 are received via the in-port 202 and terminate at the end point 203. The MPLS start point 201 also maps/creates MPLS-conform backup traffic, i.e. backup control data 210 and backup user data 211.

The approach presented in Fig.3 results in asymmetric flows towards upstream and downstream directions. Upstream in this sense can be understood as traffic from the Ethernet segment towards the MPLS network (towards edge router 309 in Fig.2), whereas downstream could be understood as traffic from said MPLS network to the Ethernet.

As an alternative, DOWN-MEP could be used instead of UP-MEP. This would result in a cross connection that is start-Node to end-Node instead of start-port-at-start-Node to end-port-at-end-Node and would be a more robust connection.

**Fig.4** shows a flow chart comprising steps of a method for network interworking. In a step 401, user data and control data according to a protocol of a first network are received by a first network component. In a step 402, the control data is mapped according to a protocol of a second network and forwarded to a second network component. In a step 403, the user data is mapped according to the protocol of the second network and forwarded to the second network.

It is to be noted that the order of steps 402 and 403 is exchangeable, i.e. step 403 could be processed prior to step 402.

## Claims

1. A method for network interworking comprising the steps:
- user data and control data according to a protocol of a first network are received by a first network component;
- the control data is mapped according to a protocol of a second network and forwarded to a second network component;
- the user data is mapped according to the protocol of the second network and forwarded to the second network component;
wherein the first network and the second network are of different type.

2. The method according to claim 1, wherein the first network comprises at least one of the following types:
- Virtual LAN (VLAN);
- Virtual LAN Cross Connect (VLAN XC);
- an Ethernet network;
- an IP network;
- a MultiProtocol Label Switching (MPLS) network.

3. The method according to any of the previous claims,
wherein the second network comprises at least one of the following types:
- Virtual LAN (VLAN);
- Virtual LAN Cross Connect (VLAN XC);
- an Ethernet network;
- an IP network;
- a MultiProtocol Label Switching (MPLS) network.

4. The method according to any of the previous claims,
wherein the first network component and/or the second network component are of the following type:
- a network node;
- a gateway;
- a switch;
- a terminal;
- a user equipment;
- a mobile phone;
- a relay node.

5. The method according to any of the previous claims, the first network component comprising an ingress port and an egress port, wherein the control data according to the protocol of the first network is connected to the egress port;

6. The method according to claim 5, wherein control data forwarded according to the protocol of the second network starts at the ingress port.

7. The method according to any of claims 5 or 6, wherein the user data received according to the protocol of the first network is mapped to user data according to the protocol of the second network at the ingress port.

8. The method according to any of the previous claims, wherein the control data according to the protocol of the first network comprises Connectivity Fault Management (CFM) traffic.

9. A device for network interworking comprising a processor unit that is arranged such that the method according of any of the preceding claims is executable on said processor.

10. The device according to claim 9, wherein said device is a communication device, in particular of the following type:
- a network node;
- a gateway;
- a switch;
- a terminal;
- a user equipment;
- a mobile phone;
- a relay node.

11. Communication system comprising the device according to any of claims 9 to 10.
